# EUROPÄISCHE PATENTSCHRIFT

(11) **EP 2 559 978 B1**
(45) Veröffentlichungstag und Bekanntmachung des Hinweises auf die Patenterteilung: **26.02.2020**
(21) Anmeldenummer: 11006823.6
(22) Anmeldetag: 19.08.2011
(51) Int. Cl.: G01F 23/296

(54) **Mobiles Ultraschall-Messgerät zur Füllstandsbestimmung bei Behältern aller Art**
Mobile ultrasonic measuring device for determining fill levels of containers of all kinds
Appareil de mesure mobile à ultrasons pour la détermination du niveau de remplissage dans des récipients de tous types

(43) Veröffentlichungstag der Anmeldung: 20.02.2013
(73) Patentinhaber: Truma Gerätetechnik GmbH & Co. KG, 85640 Putzbrunn (DE)
(72) Erfinder: Molitor, Thomas, 85640 Putzbrunn (DE); Bornemann, Lars, 83254 Breitbrunn (DE)
(74) Vertreter: Prinz & Partner mbB

(56) Entgegenhaltungen:
- EP-A2- 1 679 495
- DE-A1- 10 331 044
- DE-A1- 19 538 696
- DE-U1-202011 003 126
- GB-A- 2 126 342
- US-A1- 2004 035 208

## Beschreibung

Die Erfindung betrifft gemäß Patentanspruch 1 ein Messgerät zum Bestimmen eines Füllstands einer Flüssigkeit in einem Behälter. Das Messgerät kann insbesondere für den mobilen Einsatz und bei Behältern aller Art verwendet werden, beispielsweise zur Füllstandsbestimmung bei Flüssiggasbehältern z.B. im Campingbereich.

Das Bestimmen eines Füllstands einer Flüssigkeit in einem Behälter ist immer dann problematisch, wenn der Behälter beispielsweise aus technischen Gründen nicht einsehbar ist und keine Füllstandsanzeigevorrichtung aufweist. Dies ist beispielsweise der Fall bei einem aus Metall gefertigten Behälter zum Aufbewahren und Bereitstellen von Flüssiggas, der wegen des vorliegenden Innendrucks nicht geöffnet werden kann.

Derartige Gasflaschen werden beispielsweise im Campingbereich zum Kochen oder Heizen in einem Caravan oder Wohnmobil verwendet. Sie finden darüber hinaus auch beim Kochen oder Heizen in Haushalten oder beim Betreiben von Brennern, Heizpilzen oder Grillwagen im Gastronomiebereich Verwendung. Ähnliche Behältnisse, bei denen sich eine Füllstandsüberwachung schwierig oder aufwändig gestalten kann, finden sich auch in der Lebensmittelindustrie, im Bauhandwerk z.B. beim Betrieb technischer Brenner, im Versorgungsbereich z.B. bei der Bereitstellung von Flüssigchlor zur Wasseraufbereitung, oder bei der Feuerbekämpfung z.B. der Bereitstellung von Löschflüssigkeiten.

Es ist bekannt, den Füllstand derartiger Flüssigkeitsbehälter beispielsweise durch Wiegen zu bestimmen. Dies ist allerdings oft ungenau, insbesondere wegen des hohen Taragewichts (Leergewichts) der Flüssiggasflaschen. Weiterhin muss das Leergewicht bekannt sein und die Flasche beispielsweise auf einer Waage platziert werden. Hierfür muss sie gegebenenfalls aus einem bestehenden System entnommen werden, z.B. von einer Entnahmevorrichtung abgekoppelt werden, was hohen Aufwand verursachen kann.

Weiterhin ist ein Temperaturmessverfahren bekannt, bei dem die Temperatur eines aus einer Flüssiggasflasche ausströmenden Gases gemessen wird. Hieraus kann auf den Füllstand des Gases in der Flüssiggasflasche geschlossen werden. Dieses Verfahren ist allerdings fehleranfällig und ungenau und kann nur während einer Entnahme des Gases durchgeführt werden.

Weiterhin ist es bekannt, Flüssigkeitsbehälter wie beispielsweise Tanks mit einem Schwimmersystem auszustatten, wobei das Schwimmersystem an eine Anzeigevorrichtung angekoppelt ist, über die ein Füllstand des Behälters anzeigbar ist. Derartige Schwimmersysteme sind allerdings teuer und somit für Wechselflaschen nicht sinnvoll einsetzbar. Zudem können die Schwimmersysteme bei mechanischen Einflüssen wie beispielsweise einem Schütteln des Tanks verklemmen.

Darüber hinaus ist eine Füllstandsmessung mit Hilfe eines Ultraschallmesssystems bekannt, bei der ein Ultraschallsignal von unten durch eine Wand des Behälters in die Flüssigkeit eingeleitet wird. Anhand einer Laufzeit des Ultraschallsignals durch die Flüssigkeit und seines an einem oberen Flüssigkeitsspiegel am Übergang zwischen der Flüssigkeit und der Luft entstehenden Echos kann der Füllstand im Behälter berechnet werden.

Ein derartiges Füllstandsmessgerät zeigt beispielsweise die EP 0 955 529 A1. Das Füllstandsmessgerät weist einen Anpressmechanismus auf, durch den ein mit einer Ultraschall-Ankoppelschicht fest verbundener Ultraschallwandler bei einem Aufbringen eines Behälters auf das Füllstandsmessgerät derart gegen den Behälter gepresst wird, dass sich die Ankoppelschicht an die Oberfläche des Behälters schmiegt. Bei einem Abnehmen des Behälters wird der Ultraschallwandler wieder vom Behälter gelöst. Mit dem Füllstandsmessgerät kann die Phasengrenze zwischen einem flüssigen und gasförmigen Medium der Gasflasche geortet und so der Füllstand ermittelt und angegeben werden. Allerdings ist es bei diesem Füllstandsmessgerät notwendig, den Behälter auf das Füllstandsmessgerät aufzusetzen. Dies macht es erforderlich, den Behälter aus einem bestehenden System herauszulösen, von einer Entnahmevorrichtung abzukoppeln und/oder auf dem Füllstandsmessgerät aufzubringen. Dies ist insbesondere dann problematisch, wenn den Behälter ein hohes Gewicht aufweist, was bei Flüssiggasflaschen häufig der Fall ist.

Die DE 103 31 044 A1 zeigt eine Haltevorrichtung für einen Behälter und für eine Füllstandsmesseinrichtung. Die Haltevorrichtung ermöglicht es, in einer Offenstellung, in der eine Gasflasche beispielsweise mit großer Wucht in die Haltevorrichtung eingesetzt werden kann, die Füllstandsmesseinrichtung in einer Schutzstellung anzuordnen. In einer Geschlossenstellung kann die Füllstandsmesseinrichtung an eine Außenwand der Gasflasche gedrückt werden und eine Messung des Füllstands vorgenommen werden. Hieraus wird deutlich, dass das Vornehmen eines derartigen Messverfahrens mit einem hohen manuellen Aufwand und mit großer Belastung einhergeht.

In der DE 197 11 093 C2 ist ein Gerät zur Bestimmung des Inhalts einer Flüssiggasflasche gezeigt, bei dem ein von einem Schallsensor ausgesendetes Sendesignal und ein von einem Schallempfänger empfangenes Empfangssignal mittels eines Mikroprozessors verglichen wird, wodurch eine für die Inhaltsmenge der Gasflasche charakteristische Resonanz der Gasflasche ermittelt werden kann. Das Verfahren ist wegen der Bestimmung der charakteristischen Resonanz der Gasflasche allerdings nur für Gasflaschen einer bestimmten Art und Größe und für ein bestimmtes Gas anwendbar, beispielsweise für 11 kg Propangasflaschen aus Stahl. Es benötigt eine lange Messzeit und ist fehleranfällig gegenüber allen Störungen, die sich auf die charakteristische Resonanz der Gasflasche auswirken können.

In der DE 195 38 696 A1 ist zur Überwachung eines vorbestimmten Füllstands einer Flüssigkeit in einem Behälter ein Ultraschallwandler an der Außenseite des Behälters an einer Messstelle montiert, die auf der Höhe des zu überwachenden Füllstands liegt. Der Ultraschallwandler ist ortsfest mittels eines Adapters an der Behälterwand befestigt, beispielsweise verschraubt, verschweißt, geklebt oder mittels eines um den Behälter gelegten Spannbandes befestigt. Die Vorrichtung ist somit im Wesentlichen zur Anwendung an einem einzigen Behälter verwendbar, da sie mit diesem fest verbunden wird. Weiterhin kann lediglich der vorbestimmte Füllstand bestimmt werden. Sie ist damit zur einfachen Anwendung bzw. Erfassung eines beliebigen Füllstands beispielsweise an Wechselflaschen nicht geeignet.

Aus der GB 2 126 342 A ist ein Messgerät bekannt, welches in Form eines mobilen Handgeräts vorliegt, das sowohl eine Sendevorrichtung, eine Empfangsvorrichtung, eine Koppelvorrichtung sowie eine LED umfasst. Die LED zeigt dem Benutzer lediglich an, ob ein reflektiertes Ultraschallsignal empfangen worden ist.

In der DE 20 2011 003 126 U1 ist ein Messgerät zur Messung eines Füllstands von Flüssigkeiten in einem Tank bekannt, wobei das Messgerät über Magnete am Tank angeordnet wird. Das Ergebnis der Messung des Füllstands wird dem Benutzer über eine Anzeigeeinheit angezeigt, die als grün leuchtende LED ausgeführt ist.

Ferner ist in der EP 1 679 495 A2 ein Messgerät beschrieben, das zweiteilig aufgebaut ist, wobei in einem mobilen Teil lediglich die Empfangsvorrichtung, die Sendevorrichtung sowie die Koppelvorrichtung vorgesehen ist.

Aus der US 2004/0035208 A1 ist ein pistolenartiger Teil eines Messgeräts bekannt, das eine Sendevorrichtung, eine Empfangsvorrichtung sowie eine Koppelvorrichtung umfasst. Ferner sind Status-LEDs an dem pistolenartiger Teil angeordnet.

Der Erfindung liegt die Aufgabe zugrunde, ein Messgerät zum Bestimmen eines Füllstands einer Flüssigkeit in einem Behälter anzugeben, welches kostengünstig und einfach handhabbar ist, und welches es ermöglicht, den Füllstand des Behälters schnell und ohne ein mechanisches Herauslösen des Behälters aus einem System, beispielsweise einem Entnahme- und/oder Verbrauchsystem, zu ermitteln.

Diese Aufgabe wird durch ein Messgerät gemäß Patentanspruch 1 und durch ein Verfahren gemäß Patentanspruch 10 gelöst. Weiterentwicklungen der Erfindung sind den abhängigen Ansprüchen zu entnehmen.

Die Sendevorrichtung zum Erzeugen der Ultraschallwellen kann das Ultraschallsignal in einer beliebigen Stärke und Frequenz, beispielsweise einmalig, mehrfach oder gepulst, aussenden. Sie kann einen Ultraschallwandler aufweisen, der elektrische Energie in Ultraschallenergie wandeln kann. Beispielsweise kann die Sendevorrichtung einen Lautsprecher aufweisen. Alternativ kann die Sendevorrichtung ein piezoelektrisches Element wie beispielsweise eine piezoelektrische Keramik oder einen piezoelektrischen Kristall mit aufgebrachten Elektroden aufweisen. Wenn an die Elektroden eine Wechselspannung angelegt wird, wird das piezoelektrische Element zu mechanischen Schwingungen mit der Frequenz der Wechselspannung angeregt und dadurch das Ultraschallsignal erzeugt.

Die Empfangsvorrichtung zum Empfangen des Echos kann eine beliebige Empfangsvorrichtung für Ultraschallsignale sein und einen Ultraschallwandler wie beispielsweise ein Mikrofon oder ebenfalls ein piezoelektrisches Element mit darauf aufgebrachten Elektroden aufweisen. Wird das piezoelektrische Element durch empfangene Ultraschallwellen zu mechanischen Schwingungen angeregt, so wird zwischen den Elektroden eine Wechselspannung mit der Frequenz der mechanischen Schwingungen erzeugt. Hierdurch werden die Ultraschallwellen, beispielsweise das Echo des von der Sendevorrichtung gesendeten Ultraschallsignals, empfangbar und können beispielsweise an die Auswertevorrichtung elektrisch weitergeleitet werden.

Die Koppelvorrichtung kann zum unmittelbaren Ankoppeln des Messgeräts bzw. der Koppelvorrichtung an eine Wand eines Behälters, dessen Füllstand zu bestimmen ist, geeignet sein. Beispielsweise kann das Ultraschallsignal von der Sendevorrichtung durch die Koppelvorrichtung in die Wand einleitbar und das Echo des Ultraschallsignals durch die Koppelvorrichtung aus der Wand zu der Empfangsvorrichtung ausleitbar sein. Durch Auswerten, beispielsweise Klassifizieren des Echos kann, wie im Folgenden näher beschrieben, das Messergebnis bestimmbar sein. Das Messergebnis kann beispielsweise angeben, ob sich in einem hinter einer Fläche der Wand, an der die Koppelvorrichtung angekoppelt ist, unmittelbar angrenzenden Bereich eines Inneren des Behälters eine Flüssigkeit befindet oder nicht. Der Bereich der Fläche der Wand, in dem die Koppelvorrichtung angekoppelt ist, wird im Folgenden auch als Koppelfläche bezeichnet.

Der Behälter kann ein beliebiger Behälter zum Aufnehmen der Flüssigkeit sein. Der Behälter kann beispielsweise ein Tank, ein Fass, ein Kanister oder eine Röhre zur Flüssigkeitsleitung sein. Weiterhin kann eine einfache Beobachtung des Füllstands nicht möglich sein. Beispielsweise kann ein Einblick in das Innere des Behälters durch eine undurchsichtige Umwandung und/oder eine dunkle Umgebung erschwert oder unmöglich sein. Insbesondere kann es sich um einen Druckbehälter zur Aufnahme von Flüssiggas wie beispielsweise eine Gasflasche oder Gaskartusche handeln, in die wegen der stabilen Wände und wegen des hohen Innendrucks kein Einblick genommen werden kann. Derartige Gasflaschen können ein Volumen von bis zu 150 Litern besitzen und einen Druck von bis zu 300 bar aufweisen. Sie werden wegen des hohen Druckes beispielsweise aus Aluminium oder Stahl gefertigt und weisen daher häufig ein hohes Gewicht auf. Eine Füllstandsüberwachung mit den eingangs genannten bekannten Methoden gestaltet sich bei derartigen Gasflaschen daher schwierig.

Das Messgerät kann zur Füllstandsbestimmung beispielsweise ein Verfahren verwenden, das darauf beruht, dass sich Ultraschallwellen in Gasen bzw. Flüssigkeiten unterschiedlich ausbreiten. In Flüssigkeiten breiten sich Ultraschallwellen im Wesentlichen dämpfungsarm aus. In Luft hingegen werden Ultraschallwellen stark gedämpft. Bei einem Phasenübergang, das heißt einem Durchtritt von einem festen, flüssigen oder gasförmigen Material in ein anderes, können Ultraschallwellen gebrochen oder gebeugt werden, und eine Interferenz zwischen den Ultraschallwellen kann auftreten. Demzufolge breiten sich Ultraschallwellen nachdem Einleiten in eine Flüssigkeit gut aus und werden an den Phasenübergängen beispielsweise zu einem Festkörper oder zu einem gasförmigen Medium reflektiert und als Echo zurückgeleitet. Nach einem Einleiten in Luft ist wegen der starken Dämpfung ein etwaiges Echo überhaupt nicht oder wenn, dann nur schwach zu empfangen.

Ein Übergang von Ultraschallwellen in einen Festkörper oder eine Flüssigkeit erfolgt nur, wenn die Ultraschallwellen in unmittelbarer Nähe des Festkörpers bzw. der Flüssigkeit abgestrahlt werden, oder wenn ein Koppelmedium mit angepassten akustischen Eigenschaften zwischengelagert ist. Die Koppelvorrichtung kann beispielsweise ein derartiges Koppelmedium aufweisen und somit ein Einleiten des Ultraschallsignals in die Wand des Behälters und ein Ausleiten des Echos aus der Wand des Behälters ermöglichen.

Die Koppelvorrichtung kann hierzu unmittelbar und direkt an die Wand des Behälters angekoppelt werden. Insbesondere kann das Koppeln direkt und ohne Lufteinschluss beispielsweise durch Andrücken bzw. Anpressen der Koppelvorrichtung an die Wand des Behälters erfolgen. Hierzu kann die Koppelvorrichtung als Koppelmedium beispielsweise ein elastisches Koppelkissen mit angepassten akustischen Eigenschaften, einer geeigneten Dicke und mit zur Auflage an der Wand vorgesehenen, beispielsweise glatten, geriffelten und/oder genoppten Auflageflächen aufweisen. Das Koppelkissen kann beim Andrücken direkt auf der Wand aufliegen und sich durch seine Elastizität dicht und im Wesentlichen ohne Lufteinschluss an die Wand anschmiegen.

In dieser Position kann die Koppelvorrichtung bzw. das Koppelkissen als Schallleiter fungieren und das von der Sendevorrichtung erzeugte Ultraschallsignal in die Wand des Behälters einleiten. Ebenso kann die Koppelvorrichtung bzw. das Koppelkissen oder eine weitere Koppelvorrichtung bzw. ein weiteres Koppelkissen das Echo des Ultraschallsignals aus der Wand des Behälters aufnehmen und zur Empfangsvorrichtung ausleiten.

Die Auswertevorrichtung kann beispielsweise das Aussenden des Ultraschallsignals durch die Sendevorrichtung steuern und auf dieser Basis bzw. mit Bezug auf das Ultraschallsignal das von der Empfangsvorrichtung empfangene Echo des Ultraschallsignals auswerten. Beispielsweise kann eine Ausprägung oder eine Qualität des Echos bestimmt, beispielsweise anhand messbarer Größen ermittelt werden. Die Ausprägung bzw. Qualität des Echos oder das Echo selbst können auf dieser Basis klassifiziert werden. Beispielsweise kann anhand messbarer Eigenschaften des Echos eine Klassifizierung, beispielsweise eine Zuordnung des Echos zu einer vorbestimmten Klasse, vorgenommen werden. Die Klassen können derart vorbestimmt sein, dass eine Klasse Echos umfasst, die entstehen können, wenn sich hinter der Koppelfläche im unmittelbar angrenzenden Bereich des Inneren des Behälters die Flüssigkeit befindet, und eine weitere Klasse Echos, die entstehen können, wenn sich dort keine Flüssigkeit befindet. Dies ermöglicht ein Bestimmen des Füllstands.

Die Auswertevorrichtung kann beispielsweise eine Signalverarbeitungsvorrichtung aufweisen, zum Beispiel in Form eines auf einer Platine angeordneten, über Signalleitungen mit der Sendevorrichtung und der Empfangsvorrichtung verbundenen Mikroprozessors. Sie kann beispielsweise eine Frequenz, eine Stärke oder einen Puls des auszusendenden Ultraschallsignals vorgeben, und anschließend das Echo des ausgesendeten Ultraschallsignals im Hinblick auf seine Frequenz, seine Stärke oder seinen Puls auswerten. Beispielsweise kann das Echo vor dem Auswerten verstärkt und/oder gefiltert werden. Beispielsweise kann das Echo auf Basis seiner Frequenz, seiner Stärke oder seines Pulses klassifiziert bzw. bewertet werden.

Wie bereits beschrieben, hängt das Echo bzw. seine Stärke, seine Frequenz oder sein Puls davon ab, ob sich hinter der Koppelfläche in einem unmittelbar dort angrenzenden Bereich des Inneren des Behälters die Flüssigkeit befindet oder nicht. Befindet sich dort eine Flüssigkeit, so kann das Ultraschallsignal sich dämpfungsarm in der Flüssigkeit ausbreiten und an einen Phasenübergang zu einem Festkörper oder einem gasförmigen Medium, beispielsweise an einer gegenüberliegenden Wand bzw. der dahinterliegenden Luft, oder an einer Oberfläche der Flüssigkeit reflektiert werden. Das so entstehende Echo des Ultraschallsignals kann sich in der Flüssigkeit ebenfalls dämpfungsarm ausbreiten und ist daher deutlich durch die Empfangsvorrichtung empfangbar. Befindet sich im Bereich des Inneren des Behälters hinter der Koppelfläche jedoch keine Flüssigkeit, sondern z.B. Luft oder ein Gas, so wird das Ultraschallsignal stark gedämpft. Das Ultraschallsignal wird daher nicht bis an die gegenüberliegende Wand oder bis an einen Flüssigkeitsspiegel geleitet, sondern vorher gedämpft. Ein Echo des Ultraschallsignals ist daher nicht oder nur sehr schwach durch die Empfangsvorrichtung empfangbar. Folglich kann das Echo nach einer Stärke seines Empfangs klassifiziert und beispielsweise einer Klasse "Signalübermittlung durch flüssiges Medium" oder "Signalübermittlung durch gasförmiges Medium" zugeordnet werden.

Durch einen Abgleich des gesendeten Ultraschallsignals und des empfangenen Echos kann die Auswertevorrichtung daher mit einer hohen Genauigkeit bestimmen, ob sich hinter der Koppelfläche, also hinter der Fläche der Wand, an der die Koppelvorrichtung angekoppelt ist, eine Flüssigkeit befindet oder nicht. Dies kann durch die Klassifizierung des Echos angegeben werden und das Messergebnis der Auswertevorrichtung bestimmen.

Das Messergebnis kann in beliebiger Weise durch die Ausgabevorrichtung ausgegeben, also für einen Bediener des Messgeräts erkennbar gemacht werden. Beispielsweise kann die Ausgabevorrichtung eine optische Anzeige wie beispielsweise ein Display oder eine Leuchtvorrichtung aufweisen, durch die das Messergebnis optisch ausgegeben werden kann. Alternativ oder zusätzlich kann die Ausgabevorrichtung auch einen Summer oder einen Lautsprecher aufweisen, durch die das Messergebnis akustisch, beispielsweise durch eine Sprachausgabe oder ein Tonsignal, ausgegeben werden kann.

Durch das Ausgeben des Messergebnisses wird der Bediener darüber informiert, ob sich hinter der Koppelfläche die Flüssigkeit befindet oder nicht. Durch sukzessives Wiederholen des Messvorgangs, beispielsweise seitlich an dem Behälter auf unterschiedlichen Höhenniveaus, kann der Bediener den Füllstand in dem Behälter erfassen bzw. den Flüssigkeitsspiegel beliebig genau lokalisieren.

Dies kann ohne eine Einflussnahme auf den Behälter oder seine Außenhaut, insbesondere ohne ein Öffnen oder Bewegen des Behälters geschehen. Am Behälter müssen keine besonderen Vorrichtungen vorgesehen sein, das Messgerät kann direkt auf einer glatten Außenhaut des Behälters aufgesetzt werden. Das Verfahren kann daher für beliebige Behälter angewendet werden. Insbesondere muss der Behälter nicht aus einer Position, in der er sich befindet, bewegt werden oder aus einem System, in dem er beispielsweise durch ein Ventil angeschlossen ist, abgekoppelt werden. Lediglich ein Teilbereich der Wand des Behälters muss für den direkten Kontakt mit dem Messgerät zugänglich sein. Die Messung kann in jeder Lage, beispielsweise an einem stehenden oder liegenden Behälter vorgenommen werden, und ist unabhängig davon, ob im Moment der Messung Gas entnommen wird oder nicht. Die Messung geht schnell vonstatten und ist für den Bediener mit nur geringem Aufwand verbunden. Durch eine Anpassung beispielsweise einer Auswertelogik bzw. einer Auswertesoftware der Auswertevorrichtung kann das Messgerät für den Einsatz an unterschiedlich gearteten Behältern aus unterschiedlichen Materialien wie beispielsweise Stahl, Aluminium oder Kunststoff, sowie an unterschiedliche Flüssigkeiten angepasst bzw. ausgelegt werden. Folglich erlaubt das Messgerät ein einfaches und kostengünstiges Bestimmen eines Füllstands einer beliebigen Flüssigkeit in einem beliebigen Behälter.

Die Sendevorrichtung, die Empfangsvorrichtung, die Koppelvorrichtung, die Auswertevorrichtung und die Ausgabevorrichtung können in oder an einem mobilen, beispielsweise tragbaren Handstück angeordnet sein. Beispielsweise kann dass Handstück eine Länge von 15 cm oder 20 cm und ein Gewicht von 150 g oder 200 g aufweisen. Dies erlaubt die Gestaltung des Messgeräts als mobiles, tragbares und für den Benutzer einfach handhabbares Gerät, beispielsweise mit den Ausmaßen eines Mobiltelefons oder einer Taschenlampe. Das Messgerät kann daher auch dann einfach eingesetzt werden, wenn in einer Umgebung des Behälters nur wenig Raum zum Ankoppeln des Messgeräts vorhanden ist. Weiterhin kann das tragbare, mobile Messgerät zu verschiedenen Behältern mitgenommen werden, sodass mit nur einem Messgerät die Füllstände einer Vielzahl von Behältern erfasst werden können. Die Integration des Messgeräts in einem Handstück macht das Messgerät auch im häuslichen oder im Campingbereich einsetzbar und leicht handhabbar. Das manuelle Halten und Ankoppeln des handgehaltenen Messgeräts macht die Anwendung auch für den Laien und Privatmann einfach. Das Gehäuse des Handstücks kann beispielsweise aus Kunststoff in einem ergonomischen und attraktiven Design gestaltet sein.

In einer Ausführungsform können die Sendevorrichtung, die Empfangsvorrichtung, die Auswertevorrichtung und/oder die Ausgabevorrichtung beispielsweise durch einen in dem Handstück angeordneten Energiespeicher mit elektrischer Energie versorgbar sein. Als elektrischer Energiespeicher können beispielsweise handelsübliche Batterien oder wiederaufladbare Akkumulatoren vorgesehen sein. Dies ermöglicht eine gute Verfügbarkeit des Messgeräts unabhängig von Zugängen zu einem Stromversorgungsnetz, sowie einen kostengünstigen Betrieb mit handelsüblichen Energiespeichern.

In einer Ausführungsform kann die Koppelvorrichtung eine Kontakteinrichtung aufweisen, die Kontakteinrichtung zwischen einer Offenstellung und einer Geschlossenstellung bewegbar ist, und bei einem Erreichen der Geschlossenstellung das Ultraschallsignal sendbar, das Echo des Ultraschallsignals empfangbar und/oder das Messergebnis bestimmbar ist.

Beispielsweise kann die Koppelvorrichtung durch ein Andrücken der Koppelvorrichtung an die Wand ankoppelbar und durch ein Lösen von der Wand abkoppelbar sein. Dies ermöglicht ein intuitives Auslösen des Messvorgangs bei gleichzeitig guter Positionierung der Koppelvorrichtung an der Wand des Behälters.

Die Kontakteinrichtung kann beispielsweise als ein Schalter oder Mikroschalter mit der Koppelvorrichtung fest oder elastisch gekoppelt sein und beispielsweise beim Andrücken der Koppelvorrichtung an die Wand in die Geschlossenstellung bewegbar sein, wodurch der Messvorgang gestartet werden kann. Dies ermöglicht ein intuitives Auslösen des Messvorgangs durch den Bediener. In dieser Ausführungsform muss daher kein separater Schalter zum Auslösen des Messvorgangs durch den Bediener vorgesehen sein.

Das Messgerät kann beispielsweise beim Erreichen der Geschlossenstellung durch die Kontakteinrichtung eingeschaltet und die Messung gestartet werden. Weiterhin kann das Messgerät beispielsweise nach einer vorgegebenen Zeitspanne, wie beispielsweise nach 20 Sekunden, innerhalb der keine Bedienvorgabe durch den Bediener an dem Messgerät gemacht wurde, automatisch wieder abgeschaltet werden. Dies ermöglicht eine einfache, intuitive Bedienung und schont den Energievorrat des Energiespeichers. Ein separater Schalter muss nicht vorgesehen werden.

In einer Ausführungsform kann eine akustische Signalvorrichtung zum Ausgeben eines akustischen Signals beim Beenden des Bestimmens des Messergebnisses vorgesehen sein. In dieser Ausführungsform kann zur Information des Bedieners beim Einschalten des Geräts, beim Auslösen der Messung, beim Abschluss der Messung und/oder beim Ausschalten des Geräts ein beispielsweise akustisches Signal ausgegeben werden.

In einer weiteren Ausführungsform kann die Koppelvorrichtung eine Federeinrichtung aufweisen, wobei die Kontakteinrichtung durch die Federeinrichtung in der Offenstellung haltbar ist.

Die Federeinrichtung kann ein beliebiges Federelement aufweisen, wie beispielsweise eine Spiralfeder, einen Gummipuffer oder eine Gummikappe. Die Federeinrichtung kann mit der Kontakteinrichtung derart gekoppelt sein, dass die Federeinrichtung beispielsweise bei einem Entspannen die Kontakteinrichtung in die Offenstellung bewegt. Beim Bewegen der Kontakteinrichtung in die Geschlossenstellung, beispielsweise beim Andrücken der Koppelvorrichtung in die Wand, kann die Federeinrichtung gespannt werden. Folglich wird beim darauffolgenden Lösen von der Wand die Kontakteinrichtung automatisch in die Offenstellung bewegt.

Folglich kann die Koppelvorrichtung die Funktion eines Druckschalters haben, der bei einem Drücken, also bei einem Andrücken der Koppelvorrichtung an die Wand des Behälters, bzw. bei einem Bewegen der Kontakteinrichtung in die Geschlossenstellung den Messvorgang auslöst. Nach dem Lösen der Koppelvorrichtung von der Wand stellt die Federeinrichtung sicher, dass die Kontakteinrichtung in die Offenstellung bewegt wird, sodass die Koppelvorrichtung bei einem erneuten Koppeln sofort einen neuen Messvorgang auslösen kann. Dies ermöglicht ein einfaches, intuitives Bedienen des Messgeräts und stellt eine gute akustische Kopplung sicher.

In einer weiteren Ausführungsform weist die Koppelvorrichtung eine ein elastisches Material aufweisende Kappe auf. Die Sendevorrichtung und/oder die Empfangsvorrichtung können innerhalb der Kappe, beispielsweise unmittelbar angrenzend an eine Stirnseite der Kappe angeordnet sein. Die Kontakteinrichtung kann mit der Kappe gekoppelt sein.

Durch das elastische Material kann sich die Kappe beispielsweise an die Wand anschmiegen bzw. sich der Form der Wand derart anpassen, dass ein Einschließen von Luft beim Ankoppeln verhindert werden kann. Die Außenseite der Kappe kann glatt sein, was ein gutes Ankoppeln der Kappe unter Ausschluss von Luft und somit eine gute akustische Ankopplung an die Behälterwand sicherstellt.

Die Kappe kann aus einem Kunststoff bzw. Gummi bestehen und eine geeignete Dicke für eine gute akustische Ein- und Auskopplung aufweisen. Beispielsweise kann an der Stirnseite der Kappe das Koppelkissen mit einer eine gute akustische Kopplung sicherstellenden Dicke ausgeformt sein.

Zusätzlich kann beim Ankoppeln beispielsweise an eine Unebenheiten aufweisende Wand ein beispielsweise viskoses Koppelgel wie beispielsweise ein Silikongel aufgebracht werden. Dies ist allerdings in den meisten Fällen nicht notwendig, da auch bei einer Trockenankopplung der Kappe ein eindeutiges Messergebnis erzielt werden kann.

Die Sende- und/oder die Empfangsvorrichtung können innerhalb der Kappe beispielsweise an der Stirnseite und/oder unmittelbar angrenzend an das Koppelkissen angeordnet sein, was eine direkte Ein- bzw. Ausleitung des Ultraschallsignals bzw. seines Echos ermöglicht. Die Sende- und Empfangsvorrichtung können an dieser Position durch die Kappe gut gegen äußere Einflüsse geschützt werden, beispielsweise gegen ein Eindringen von Schmutz oder Flüssigkeit.

Die Kontakteinrichtung kann mit der Kappe derart gekoppelt sein, dass durch ein Andrücken der Kappe die Kontakteinrichtung unmittelbar in die Geschlossenstellung bewegbar ist. Beispielsweise kann die Kontakteinrichtung an einem im Wesentlichen starren Kunststoffteil oder an einer Kunststoffhülse befestigt oder beispielsweise als Fortsatz oder Finger ausgeführt sein. Die Kappe kann über das Kunststoffteil bzw. die Kunststoffhülse gezogen sein. So kann bei einem Andrücken der Kappe die Kunststoffhülse axial entlang einer Längsachse des Messgeräts in das Messgerät hineingeschoben und dabei der Finger in die Geschlossenstellung bewegt werden und beispielsweise einen Mikroschalter betätigen.

Die aus der Kunststoffhülse und der Kappe bestehende Einheit kann die innen liegenden, empfindlichen Teile der Sendevorrichtung, der Empfangsvorrichtung, der Kontakteinrichtung und des Mikroschalters sowie auch die Auswertevorrichtung vor äußeren Einflüssen schützen. Dies erhöht die Lebensdauer und Robustheit des Messgeräts.

Weiterhin kann ein mechanischer Anschlag vorgesehen sein, der eine axiale Bewegung der Kunststoffhülse beim Aufdrücken der Kappe beschränkt. Hierdurch kann erreicht werden, dass die Kontakteinrichtung zwar mit einem bestimmten Druck in die Geschlossenstellung bewegbar sein kann, dass aber ein zu hoher Druck, welcher beispielsweise den in der Geschlossenstellung schaltbaren Mikroschalter zerstören oder den Finger beschädigen könnte, verhindert bzw. abgefangen werden kann.

In dieser Ausführungsform kann die Kappe bei einem Nachlassen des Anpressdrucks gegen die Wand nach außen federn und dadurch die Kunststoffhülse nach außen ziehen. Hierdurch kann die mit der Kunststoffhülse gekoppelte Kontakteinrichtung aus der Geschlossenstellung in die Offenstellung bewegbar sein. Folglich kann die Kappe in dieser Ausführungsform die Funktion der Federeinrichtung übernehmen.

In einer weiteren Variante kann die Sendevorrichtung, die Empfangsvorrichtung und/oder die Kontakteinrichtung mit der Kappe zu einem in dem Messgerät axial beweglichen Bauteil integriert und/oder vulkanisiert sein.

Das Bauteil bildet einen integrierten Messkopf oder Mess- und Schaltkopf, der in dem Messgerät axial hin- und herbewegbar ist, und der beim Ankoppeln an die Wand des Behälters axial in das Messgerät hineingedrückt und beim Lösen von der Wand des Behälters aus dem Messgerät herausbewegt werden kann. Dies erleichtert ein einfaches Bedienen des Messgeräts, sorgt für eine geschützte Position der integrierten Sende- und Empfangsvorrichtung und erlaubt eine einfache Montage des Messgeräts in der Fertigung.

In einer weiteren Ausführungsform weist das Messgerät einen die Sendevorrichtung und die Empfangsvorrichtung integrierenden Ultraschallwandler auf.

Wie bereits beschrieben, kann der Ultraschallwandler eine Piezokeramik oder einen Piezokristall aufweisen, der, wenn über zwei Elektroden mit einer Wechselspannung beschickt, eine entsprechende Ultraschallwelle erzeugen kann, und der, wenn eine Ultraschallwelle mit einer bestimmten Frequenz auf ihn auftrifft, eine entsprechende Wechselspannung an den Elektroden erzeugt. Dies ermöglicht eine einfache und kostengünstige Gestaltung des Messgeräts.

In einer weiteren Ausführungsform kann die Ausgabevorrichtung eine optische Signalvorrichtung aufweisen, wobei die optische Signalvorrichtung in Abhängigkeit von einem Messergebnis schaltbar sein kann.

Beispielsweise kann die optische Signalvorrichtung beim Feststellen einer Flüssigkeit in dem Ankoppelbereich angeschaltet werden und beim Feststellen eines Gases in dem Ankoppelbereich nicht angeschaltet werden. Weiterhin können farbige Signalvorrichtungen, wie beispielsweise farbige Leuchtdioden (LED) in einer ersten und zweiten Farbe, zum Beispiel in Rot und Grün, vorgesehen sein. Beispielsweise kann beim Feststellen einer Flüssigkeit eine grüne Leuchtdiode angeschaltet werden, und beim Feststellen eines Gases bzw. von Luft eine rote Leuchtdiode. Eine weitere Leuchtdiode in einer dritten, beispielsweise gelben Farbe kann nach den Starten eines Messvorgangs bis zum Vorliegen des Messergebnisses und in sonstigen Betriebszuständen angeschaltet sein. Zusätzlich kann ein akustisches Signal beim Beenden der Messung ausgegeben werden.

Das Licht der optischen Signalvorrichtung kann durch einen transparenten Lichtleiter an eine geeigneten Stelle des Messgeräts bzw. des Handstücks oder des Gehäuses geleitet und dort sichtbar für den Bediener abgestrahlt werden. Die Verwendung farbiger Leuchtdioden ermöglicht es, das Messergebnis intuitiv erfassbar für den Bediener auszugeben. Weiterhin kann die Ausgabevorrichtung auf diese Weise kostengünstig gestaltet sein, eine komplizierte Bild- oder Textanzeige ist nicht notwendig.

Die Anschlagvorrichtung kann stirnseitig an dem Messgerät und in einer typischen Bedienstellung des Messgeräts beispielsweise seitlich, z.B. links und rechts neben der Koppelvorrichtung, angeordnet sein. Sie kann die Koppelvorrichtung axial entlang einer Längsachse des Messgeräts oder den Mess- und Schaltkopf axial umschließen. Sie kann ein Material mit einer höheren Festigkeit bzw. Steifigkeit als das der Koppelvorrichtung aufweisen.

Das Vorsehen der Anschlagvorrichtung ermöglicht es dem Bediener, den Anstellwinkel beim Ankoppeln der Koppelvorrichtung an der Wand des Behälters zu kontrollieren und somit eine gute akustische Kopplung zu erreichen. Weiterhin kann durch die Anschlagvorrichtung das Messgerät vor einem zu hohen Druck geschützt werden. Insbesondere kann ein zu hoher Anpressdruck durch die Anschlagvorrichtung abgefangen werden. Ein zu geringer Druck wird wegen des fehlenden Anschlags für den Bediener haptisch erfassbar. Das starre Material kann beispielsweise ein Kunststoff oder ein Metall sein.

Durch eine schaltbare Leuchtvorrichtung kann Licht im Bereich der Koppelvorrichtung derart abgestrahlt werden, dass die Wand des Behälters beim Hinführen des Messgeräts beleuchtet und so die Wahl einer geeigneten Ankoppelfläche bzw. Anpressstelle unterstützt werden kann. Dies erleichtert insbesondere die Füllstandsmessung von Behältern an dunklen, schwer zugänglichen Stellen. Durch die schaltbare Leuchtvorrichtung kann eine Beleuchtung nur dann erzeugt und Energie hierfür nur dann aufgewendet werden, wenn der Bediener dies für hilfreich hält und die Leuchtvorrichtung anschaltet.

Das lichtdurchlässige Material kann ein transparenter Kunststoff sein, der durch die Leuchtvorrichtung, beispielsweise durch eine oder mehrere Leuchtdioden, durchleuchtbar ist.

Die Anschlagvorrichtung kann beispielsweise als Glaskörper oder als Körper aus einem transparenten Kunststoff den die Koppelvorrichtung beinhaltenden Messkopf des Messgeräts radial umschließen, was eine gute Positionierung und Ausleuchtung beim Koppeln ermöglicht. Um ein Verkratzen einer Außenfläche des Glaskörpers zu verhindern oder zu verringern, kann der Glaskörper eine geeignete Oberflächengestaltung aufweisen, beispielsweise mit Vorsprüngen bzw. schmalen Riffeln zum Anstoßen an der Wand und mit zurückgesetzten, breiteren Flächen, die in dieser Lage vor einem Verkratzen geschützt sind.

Ein Verfahren zum Bestimmen eines Füllstands einer Flüssigkeit in einem Behälter mit Hilfe eines Messgeräts wie vorstehend beschrieben weist einen Messvorgang auf mit einem Andrücken der Koppelvorrichtung an eine seitliche Wand des Behälters auf einem Höhenniveau, einem Erzeugen des Ultraschallsignals durch die Sendevorrichtung und einem Einleiten des Ultraschallsignals in die Wand durch die Koppelvorrichtung, einem Ausleiten des Echos aus der Wand durch die Koppelvorrichtung und einem Erfassen des Echos durch die Empfangsvorrichtung, einem Bestimmen des Messergebnisses auf Basis einer Klassifizierung des Echos, wobei das Messergebnis angibt, ob sich in einem hinter einer Fläche der Wand, an der die Koppelvorrichtung angekoppelt ist, unmittelbar angrenzenden Bereich eines Inneren des Behälters eine Flüssigkeit befindet oder nicht, und einem Ausgeben des Messergebnisses durch die Ausgabevorrichtung, sowie ein Ausleuchten eines um die Koppelvorrichtung gelegenen Bereichs auf Anforderung durch einen Bediener über die schaltbare Leuchtvorrichtung im Bereich der Koppelvorrichtung.

Das Verfahren kann eine beliebige Ausführungsform des vorstehend beschriebenen Messgeräts verwenden. Die Koppelvorrichtung des Messgeräts wird in dem Verfahren an eine seitliche Wand des Behälters auf einem beispielsweise durch den Bediener beliebig zu wählenden Höhenniveau angedrückt. Durch das Ausgeben des Messergebnisses, welches in der vorstehend beschriebenen Weise gewonnen wird, wird der Bediener darüber informiert, ob sich in dem Koppelbereich, in dem die Koppelvorrichtung an der Wand angekoppelt ist, hinter der Wand eine Flüssigkeit befindet oder nicht. Entsprechend kann der Bediener abschätzen, ob ein Füllstand bzw. Flüssigkeitspegel in dem Behälter oberhalb oder unterhalb des Höhenniveaus ist. Dies ermöglicht ein einfaches, intuitives Abschätzen des Füllstands durch den Bediener, wie beispielsweise ein Prüfen, ob ein minimaler Füllstand noch enthalten ist.

Eine Ausführungsform des Verfahrens weist ein Auslösen des Messvorgangs durch Andrücken der Koppelvorrichtung an die Wand an.

Durch das Andrücken der Koppelvorrichtung an die Wand kann, wie oben beschrieben, beispielsweise die Kontaktvorrichtung in die Geschlossenstellung bewegt werden und so der Messvorgang ausgelöst werden. Dies ermöglicht ein intuitives Auslösen des Messvorgangs ohne ein separates Betätigen beispielsweise eines Schalters durch den Bediener. Ein Ende des Messvorgangs kann dem Bediener beispielsweise durch ein akustisches Signal angezeigt werden. Ein separates Bedienelement zum Auslösen und/oder Beenden des Messvorgangs muss an dem Messgerät daher nicht vorgesehen sein. Das Messgerät kann beispielsweise nach einem vorgegebenen Zeitraum, in dem der Bediener keine Bedienvorgabe gemacht hat, ausgeschaltet werden.

Beispielsweise kann auf Anforderung des Bedieners durch Betätigen eines Tasters die oben beschriebene, im Wesentlichen aus einem lichtdurchlässigen Material bestehende Anschlagvorrichtung durch die Leuchtvorrichtung durchleuchtet werden. Dies ermöglicht es dem Bediener, auch in einem unzugänglichen, dunklen Bereich eine geeignete Koppelfläche an der Wand des Behälters zu erkennen und das Messgerät geeignet anzukoppeln. Weiterhin kann eine derartige Taschenlampenfunktion den Bediener auch außerhalb des Messvorgangs unterstützen und so die Akzeptanz des Messgeräts erhöhen.

Der Füllstand kann durch Wiederholen des Messvorgangs mit Andrücken der Koppelvorrichtung an die seitliche Wand auf einem weiteren Höhenniveau abgeschätzt werden. Beispielsweise kann der Bediener den Messvorgang sukzessive und mehrfach auf verschiedenen Höhenniveaus durchführen. Dies ermöglicht es ihm, den Füllstand des Behälters mit beliebiger Genauigkeit abzuschätzen. Da für das Auslösen des Messvorgangs lediglich das Andrücken der Koppelvorrichtung an die Wand und darüber hinaus keine weitere Bedienvorgabe notwendig sein kann, kann der Messvorgang mit nur sehr geringem Aufwand durch den Bediener wiederholt werden.

Diese und weitere Merkmale der Erfindung werden nachfolgend anhand von Beispielen unter Zuhilfenahme der begleitenden Figuren näher erläutert. Es zeigen:
- Fig. 1: eine Flüssiggasflasche und ein Messgerät zum Bestimmen eines Füllstands in der Flüssiggasflasche;
- Fig. 2: eine Ausführungsform des Messgeräts aus Fig. 1 in einer seitlichen Schnittansicht;
- Fig. 3: die Ausführungsform aus Fig. 2 in einer perspektivischen Außenansicht; und
- Fig. 4: eine perspektivische Schnittansicht der Ausführungsform aus Fig. 2

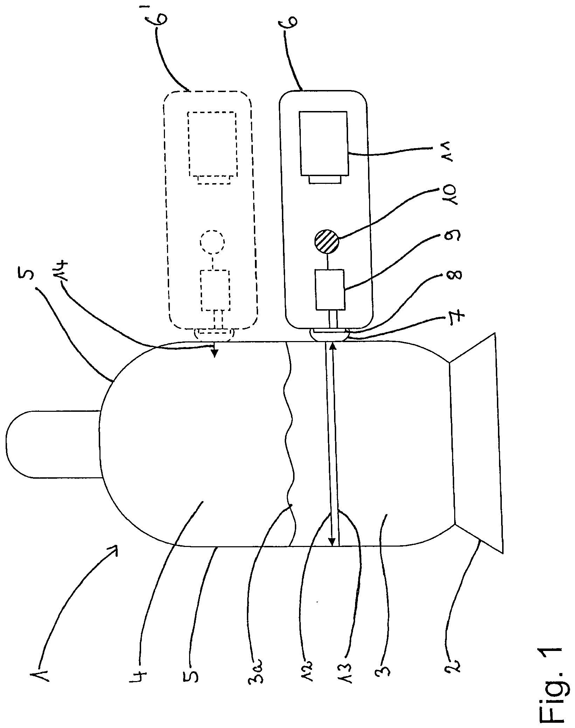

Fig. 1 zeigt schematisch in einer seitlichen Schnittansicht eine Gasflasche 1 mit einem Standfuß 2, welche mit einem Flüssiggas 3 teilweise befüllt ist. Oberhalb eines Oberflächenspiegels 3a des Flüssiggases 3 ist eine Luft 4 in der Gasflasche 1 eingeschlossen.

Seitlich an einer Wand 5 der Gasflasche 1 ist ein Messgerät 6 angeordnet, welches über ein Koppelkissen 7 eine unmittelbare Kopplung zwischen der Wand 5 der Gasflasche 1 und einer piezokeramischen Sende- und Empfangsvorrichtung 8 des Messgeräts 6 herstellt. Das beispielsweise aus einem elastischen Kunststoff bestehende Koppelkissen 7 erlaubt so eine direkte, Luft ausschließende akustische Trockenankopplung der Sende- und Empfangsvorrichtung 8 an die Wand 5 der Gasflasche 1.

Die Sende- und Empfangsvorrichtung 8 ist elektronisch mit einer Auswertevorrichtung 9 des Messgeräts 6 verbunden, welche beispielsweise einen Mikroprozessor auf einer Platine aufweisen kann. Die Auswertevorrichtung 9 ist mit einer z.B. eine Leuchtdiode aufweisenden Leuchtvorrichtung 10 verbunden, durch die ein Auswerteergebnis der Auswertevorrichtung 9 ausgegeben, also für einen Bediener des Messgeräts 6 optisch erfassbar gemacht wird. Die Sende- und Empfangsvorrichtung 8, die Auswertevorrichtung 9 und die Leuchtvorrichtung 10 sind aus einer Batterie 11 mit elektrischer Energie versorgbar.

In dem Messgerät 6 kann beispielsweise bei einem Andrücken des Koppelkissens 7 an die Wand 5 ein Mikroschalter (nicht gezeigt) betätigt werden, der ein Senden eines Ultraschallsignals durch die Sende- und Empfangsvorrichtung 8 auslöst. Das Ultraschallsignal kann durch die akustische Ankopplung an die Wand 5 in die Wand 5 und durch diese in das hinter der Wand befindliche Flüssiggas 3 eingeleitet werden. Da das Ultraschallsignal, wie durch einen ersten Pfeil 12 illustriert, im Wesentlichen ungedämpft durch das Flüssiggas 3 bis zu einem gegenüberliegenden Abschnitt der Wand 5 geleitet wird, entsteht an dem gegenüberliegenden Abschnitt der Wand 5 ein Echo des Ultraschallsignals, welches, wie durch einen zweiten Pfeil 13 illustriert, ebenfalls im Wesentlichen ungedämpft durch das Flüssiggas 3 und durch die Wand 5 über das Koppelkissen 7 zur Sende- und Empfangsvorrichtung 8 reflektiert werden kann. In der Sende- und Empfangsvorrichtung 8 kann das empfangene Echo in ein elektronisches Signal gewandelt und zur Auswertevorrichtung 9 geleitet werden.

Die Auswertevorrichtung 9 kann auf Basis des empfangenen Echos ein Messergebnis bestimmen, welches angibt, ob sich hinter der Fläche der Wand 5, an der das Koppelkissen 7 angekoppelt ist, das Flüssiggas 3 oder die Luft 4 befindet. An der Leuchtvorrichtung 10 kann das Messergebnis beispielsweise durch Schalten einer farbigen Leuchtdiode in einer ersten Farbe angezeigt werden.

In Fig. 1 ist das Messgerät 6 mit gestrichelten Linien in einer weiteren Position 6' gezeigt, in der das von der Sende- und Empfangsvorrichtung 8 erzeugte Ultraschallsignal über das Koppelkissen 7 an einer Koppelfläche der Wand 5 eingeleitet wird, hinter der sich nicht das Flüssiggas 3, sondern die Luft 4 befindet. Wie durch den kurzen Pfeil 14 dargestellt, wird das Ultraschallsignal in der Luft 4 stark gedämpft, sodass ein Echo des Ultraschallsignals nicht empfangbar oder kaum messbar ist. Dies kann durch die Auswertevorrichtung 9 erkannt und beispielsweise durch Ansteuern einer weiteren farbigen Leuchtdiode beispielsweise in einer weiteren Farbe dem Bediener angezeigt werden.

Durch ein wiederholtes Ausführen des Messvorgangs kann der Bediener den Oberflächenspiegel 3a des Flüssiggases 3 eingrenzen, lokalisieren und so den Füllstand des Flüssiggases 3 in der Gasflasche 1 erfassen. Die Gasflasche 1 muss hierzu nicht bewegt oder beispielsweise von einem Anschlussventil abgekoppelt werden. Eine Messung des Füllstands ist in jeder Lage der Gasflasche 1 möglich und unabhängig davon, ob zum Zeitpunkt der Messung das Flüssiggas 3 aus der Gasflasche 1 entnommen wird oder nicht. Die Messung kann schnell und einfach durch Andrücken des Koppelkissens 7 an die Wand 5 durchgeführt werden. Das Messergebnis wird intuitiv beispielsweise durch eine farbige Beleuchtung der Leuchtvorrichtung 10 angezeigt. Da der Messvorgang durch Andrücken des Koppelkissens 7 ausgelöst werden kann, ist hierzu kein weiteres Bedienelement an dem Messgerät 6 und keine weitere Bedienhandlung des Bedieners notwendig.

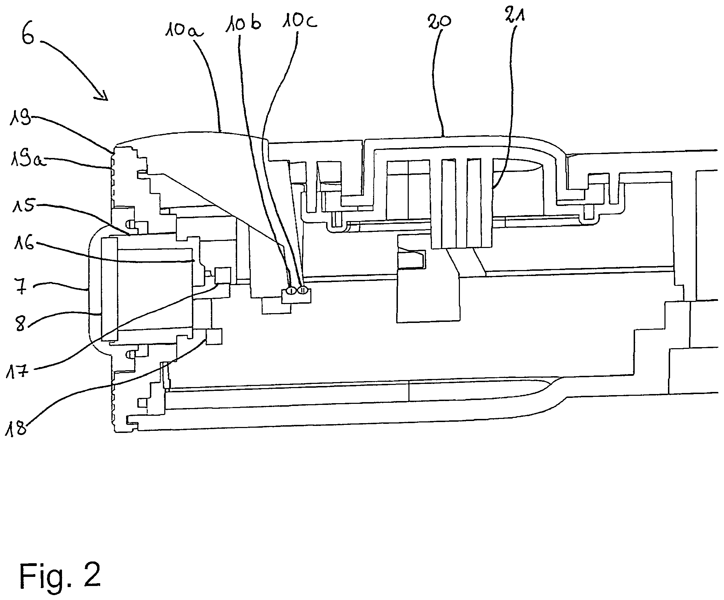

Fig. 2 zeigt beispielhaft eine seitliche Schnittansicht durch eine Ausführungsform des Messgeräts 6. An einer in der Zeichnung links dargestellten Stirnseite des Messgeräts 6 befindet sich das Koppelkissen 7, das in Form einer elastischen Kappe die Sende- und Empfangsvorrichtung 8 aufnimmt und eine direkte, beispielsweise trockene akustische Kopplung der Sende- und Empfangsvorrichtung 8 zu der Wand 5 der Gasflasche 1 ermöglicht. Das als Kappe ausgebildete Koppelkissen 7 ist über eine starre, beispielsweise aus einem Kunststoff gefertigte Hülse 15 gestülpt, welche bei einem Andrücken des Koppelkissens 7 an die Wand in dem Messgerät 6 beispielsweise axial entlang einer senkrecht zur Stirnseite stehenden Längsachse des Messgeräts 6 beweglich angeordnet ist. An der Hülse 15 ist ein Finger 16 ausgebildet, welcher beispielsweise federnd beweglich sein kann und welcher bei einem Andrücken des Koppelkissens 7 mit einem dadurch verursachten Einschieben der Hülse 15 in das Messgerät 6 auf einen Mikroschalter 17 gedrückt werden kann. Durch das Andrücken des Mikroschalters 17, welcher beispielsweise auf einer Platine der Auswertevorrichtung 9 angeordnet sein kann, kann der in Fig. 1 illustrierte Messvorgang beispielsweise durch Erzeugen des Ultraschallsignals durch die Sende- und Empfangsvorrichtung 8 ausgelöst werden.

Um die axiale Bewegbarkeit der Hülse 15 innerhalb des Messgeräts 6 zu begrenzen, kann ein Begrenzer 18 vorgesehen sein, der einen mechanischen Anschlag der axialen Bewegbarkeit der Hülse bildet. Durch den Begrenzer 18 kann folglich ein Einschieben der Hülse 15 mit einem zu starken Druck und damit ein Aufbringen eines zu hohen Drucks durch den Finger 16 auf den Mikroschalter 17 mechanisch verhindert werden. Dies ermöglicht einen effektiven Schutz der Schaltmechanik eines das Koppelkissen 7, die Sende- und Empfangsvorrichtung 8, die Hülse 15 und den Finger 16 umfassenden Messkopfs auch bei einem kräftigen Andrücken des Messkopfs an die Wand 5 durch den Bediener.

Die Leuchtvorrichtung 10 wird in der in Fig. 2 gezeigten Ausführungsform durch einen beispielsweise aus einem transparenten Kunststoff bestehenden Lichtleiter 10a gebildet, welcher ein Licht zweier farbiger Leuchtdioden 10b und 10c an eine für den Bediener sichtbare Außenseite des Messgeräts 6 leiten kann. Hierdurch wird die Anzeige des Messergebnisses für den Bediener einfach optisch erfassbar.

In der gezeigten Ausführungsform ist die Hülse 15 mit dem übergestülpten Koppelkissen 7 radial und den Messkopf umschließend von einem beispielsweise aus einem transparenten Kunststoff bestehenden Glaskörper 19 umschlossen. Der im Wesentlichen starre Glaskörper 19 kann beispielsweise einen mechanischen Anschlag beim Andrücken des Koppelkissens 7 an die Wand 5 bilden und so einen zusätzlichen Schutz vor dem Aufbringen eines zu hohen Drucks auf die Schaltmechanik des Messkopfs bilden.

Weiterhin kann der Glaskörper das Licht einer durch den Bediener schaltbaren Leuchtdiode (nicht gezeigt) aus dem Messgerät 6 stirnseitig ausleiten und so eine gute Beleuchtung der Wand 5 beim Aufbringen des Messkopfs auf die Wand 5 ermöglichen. Der Glaskörper 19 kann stirnseitig Riffel 19a aufweisen, die ein Verkratzen der hinter den Riffeln 19a zurückgesetzten Oberflächen des Glaskörpers 19 verhindern können.

Die den Glaskörper 19 durchleuchtende Leuchtdiode kann beispielsweise mittels eines Tasters 20, durch welchen ein Fortsatz 21 beispielsweise auf einen weiteren Mikroschalter der Platine gedrückt werden kann, geschaltet werden. Bei einem Betätigen des Tasters 20 kann die Leuchtdiode beispielsweise ein- und bei einem Loslassen des Tasters 20 ausgeschaltet werden.

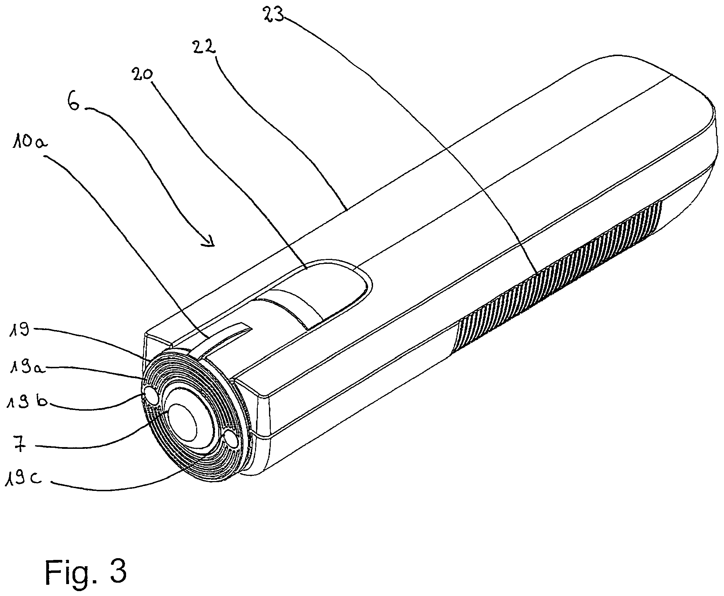

In Fig. 3 ist die Ausführungsform des Messgeräts 6 aus Fig. 2 in einer perspektivischen Außenansicht mit Blick auf den stirnseitigen Messkopf gezeigt.

Das Messgerät ist von einem kompakten Kunststoffgehäuse 22 in Form eines Handstücks mit einer axialen Länge von ungefähr 15 cm bis maximal 20 cm umschlossen, welches zur ergonomischen Gestaltung beispielsweise eine Grifffläche 23 aufweisen kann. Die kompakte, ergonomische Gestaltung ermöglicht eine einfache Handhabung des Messgeräts 6 bei der Füllstandserfassung.

Das am Messkopf stirnseitig vorgelagerte Koppelkissen 7 ist axial um eine Längsachse des Messgeräts 6 von dem stirnseitig mit den Riffeln 19a versehenen Glaskörper 19 mit Lichtauslässen 19b und 19c umgeben. An einer in einer typischen Bedienhaltung dem Gesicht des Bedieners zugewandten Oberseite tritt der Lichtleiter 10a der Leuchtvorrichtung 10 aus dem Kunststoffgehäuse 22 des Messgeräts 6 und ermöglicht eine visuell einfach erfassbare Ausgabe des Messergebnisses. Weiterhin ist an der Oberseite der Taster 20 zum Betätigen der den Glaskörper 19 durchleuchtenden Leuchtvorrichtung angeordnet.

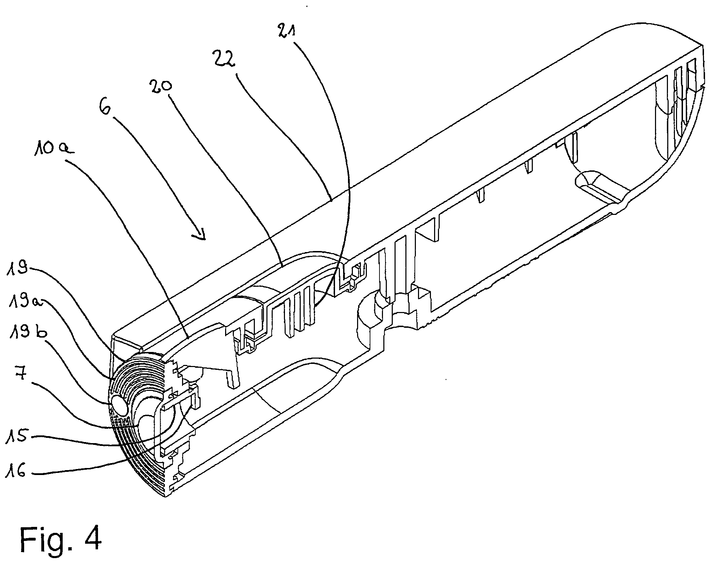

Fig. 4 zeigt perspektivisch einen seitlichen Schnitt durch das Kunststoffgehäuse 22 des Messgeräts 6, aus der die Anordnung des Tasters 20 mit dem darunterliegenden Fortsatz 21, des Lichtleiters 10a, des mit den Riffeln 19a versehenen Glaskörpers 19 und des stirnseitig an dem Messgerät 6 vorstehenden, über die Hülse 15 mit dem Finger 16 gestülpten Koppelkissens 7 ersichtlich ist. Diese Ausführungsform illustriert die kompakte und ergonomische Ausgestaltung des Messgeräts 6 und verdeutlicht die einfache und intuitive Ein-Hand-Bedienung durch den Bediener.

## Patentansprüche

1. Messgerät (6) zur Füllstandsbestimmung an einem Behälter von außerhalb, mit
- einer Sendevorrichtung (8) zum Aussenden eines Ultraschallsignals;
- einer Empfangsvorrichtung (8) zum Empfangen eines Echos des Ultraschallsignals;
- einer Koppelvorrichtung (7) zum Ausleiten des Ultraschallsignals von der Sendevorrichtung (8) und zum Einleiten des Echos des Ultraschallsignals zu der Empfangsvorrichtung;
- einer Auswertevorrichtung (9) zum Bestimmen eines Messergebnisses auf Basis einer Klassifizierung des von der Empfangsvorrichtung (8) empfangenen Echos des Ultraschallsignals, wobei das Messergebnis angibt, ob sich in einem hinter einer Fläche der Behälterwand, an der die Koppelvorrichtung (7) angekoppelt ist, unmittelbar angrenzenden Bereich eines Inneren des Behälters eine Flüssigkeit befindet oder nicht; und
- einer Ausgabevorrichtung (10) zum Ausgeben des Messergebnisses; wobei
- die Sendevorrichtung (8), die Empfangsvorrichtung (8), die Koppelvorrichtung (7), die Auswertevorrichtung (9) und die Ausgabevorrichtung (10) in oder an einem mobilen Handstück angeordnet sind, wobei
- eine schaltbare Leuchtvorrichtung im Bereich der Koppelvorrichtung (7) angeordnet ist, und wobei
- an wenigstens zwei gegenüberliegenden Seiten der Koppelvorrichtung (7) eine Anschlagvorrichtung (19) aus einem im Wesentlichen starren, lichtdurchlässigen Material angeordnet ist, das im Wesentlichen durch die Leuchtvorrichtung durchleuchtbar ist, und
- ein Anstellwinkel der Koppelvorrichtung (7) beim Ankoppeln der Koppelvorrichtung (7) an eine Wand (5) des Behälters durch die Anschlagvorrichtung (19) begrenzbar ist.

2. Messgerät (6) nach Anspruch 1, wobei
- die Koppelvorrichtung (7) eine Kontakteinrichtung (15, 16) aufweist,
- die Kontakteinrichtung (15, 16) zwischen einer Offenstellung, in der sich ein Schalter in seiner geöffneten Stellung befindet, und einer Geschlossenstellung bewegbar ist, in der sich der Schalter in seiner geschlossenen Stellung befindet, und
- bei einem Erreichen der Geschlossenstellung die Sendevorrichtung (8) eingerichtet ist, das Ultraschallsignal zu senden, die Empfangsvorrichtung (8) eingerichtet ist, das Echo des Ultraschallsignals zu empfangen und/oder die Auswerteeinheit eingerichtet ist, das Messergebnis zu bestimmen.

3. Messgerät (6) nach Anspruch 2, wobei
- die Koppelvorrichtung (7) eine Federeinrichtung (7) aufweist, und
- die Kontakteinrichtung (15, 16) durch die Federeinrichtung (7) in der Offenstellung haltbar ist.

4. Messgerät (6) nach Anspruch 2 oder 3, wobei
- die Koppelvorrichtung (7) axial beweglich entlang einer Längsachse des Messgeräts (6) in dem Handstück angeordnet ist; und
- die Koppelvorrichtung (7), die Sendevorrichtung (8) und/oder die Empfangsvorrichtung (8) bei einem Bewegen der Kontakteinrichtung in die Geschlossenstellung in das Handstück einschiebbar sind.

5. Messgerät (6) nach einem der Ansprüche 2 bis 4, wobei
- die Koppelvorrichtung (7) eine ein elastisches Material aufweisende Kappe aufweist,
- die Sendevorrichtung (8) und/oder die Empfangsvorrichtung (8) Bestandteile der Kappe sind und innerhalb der Kappe unmittelbar angrenzend an einer Stirnseite der Kappe angeordnet sind, und
- die Kontakteinrichtung (15, 16) mit der Kappe gekoppelt ist.

6. Messgerät (6) nach einem der Ansprüche 2 bis 5, wobei
- die Sendevorrichtung (8), die Empfangsvorrichtung (8) und/oder die Kontakteinrichtung (15, 16) mit der Kappe zu einem in dem Messgerät axial entlang einer Längsachse des Messgeräts (6) beweglichen Bauteil integriert und/oder vulkanisiert sind.

7. Messgerät (6) nach einem der vorstehenden Ansprüche, mit
- einem die Sendevorrichtung (8) und die Empfangsvorrichtung (8) integrierenden Ultraschallwandler (8).

8. Messgerät (6) nach einem der vorstehenden Ansprüche, wobei
- die Ausgabevorrichtung (10) eine optische Signalvorrichtung (10, 10a, 10b, 10c) aufweist, wobei die optische Signalvorrichtung (10, 10a, 10b, 10c) in Abhängigkeit von dem Messergebnis schaltbar ist.

9. Messgerät (6) nach einem der vorstehenden Ansprüche, wobei
- das Messgerät (6) eine akustische Signalvorrichtung zum Ausgeben eines akustischen Signals beim Beenden des Bestimmens des Messergebnisses aufweist.

10. Verfahren zum Bestimmen eines Füllstands einer Flüssigkeit (3) in einem Behälter (1) mit Hilfe eines Messgeräts (6) nach einem der vorstehenden Ansprüche in einem Messvorgang mit:
- Andrücken der Koppelvorrichtung (7) an eine seitliche Wand (5) des Behälters (1) auf einem Höhenniveau;
- Erzeugen des Ultraschallsignals durch die Sendevorrichtung (8) und Einleiten des Ultraschallsignals in die Wand durch die Koppelvorrichtung (7);
- Ausleiten des Echos aus der Wand durch die Koppelvorrichtung (7) und Erfassen des Echos durch die Empfangsvorrichtung (8);
- Bestimmen des Messergebnisses durch die Auswertevorrichtung (9) auf Basis einer Klassifizierung des Echos, wobei das Messergebnis angibt, ob sich in einem hinter einer Fläche der Wand (5), an der die Koppelvorrichtung (7) angekoppelt ist, unmittelbar angrenzenden Bereich eines Inneren des Behälters (1) eine Flüssigkeit (3) befindet oder nicht;
- Ausgeben des Messergebnisses durch die Ausgabevorrichtung (10); und
- Ausleuchten eines um die Koppelvorrichtung (7) gelegenen Bereichs auf Anforderung durch einen Bediener über die schaltbare Leuchtvorrichtung im Bereich der Koppelvorrichtung.

11. Verfahren nach Anspruch 10, mit
- Auslösen des Messvorgangs durch Andrücken der Koppelvorrichtung (7) an die Wand (5).

## Claims

1. A measuring device (6) for determining the filling level of a container from outside, comprising
- a transmitting device (8) for sending an ultrasonic signal;
- a receiving device (8) for receiving an echo of the ultrasonic signal;
- a coupling device (7) for routing out the ultrasonic signal from the transmitting device (8) and for introducing the echo of the ultrasonic signal to the receiving device;
- an evaluating device (9) for determining a measurement result on the basis of a classification of the echo of the ultrasonic signal received by the receiving device (8), the measurement result indicating whether or not a liquid is present in an area of an interior of the container immediately adjacent behind a surface of the container wall to which the coupling device (7) is coupled; and
- an output device (10) for outputting the measurement result; wherein
- the transmitting device (8), the receiving device (8), the coupling device (7), the evaluating device (9) and the output device (10) are arranged in or on a mobile handpiece, wherein
- a switchable luminous device is arranged in the region of the coupling device (7), and wherein
- a stop device (19) is arranged on at least two opposite sides of the coupling device (7), the stop device being made of a substantially rigid, transparent material which is substantially transilluminable by the luminous device, and
- a setting angle of the coupling device (7) can be limited by the stop device (19) when the coupling device (7) is coupled to a wall (5) of the container.

2. The measuring device (6) according to claim 1, wherein
- the coupling device (7) has a contact means (15, 16),
- the contact means (15, 16) is movable between an open position, in which a switch is in its open position, and a closed position, in which the switch is in its closed position, and
- when the closed position is reached, the transmitting device (8) is configured to transmit the ultrasonic signal, the receiving device (8) is configured to receive the echo of the ultrasonic signal, and/or the evaluating unit is configured to determine the measurement result.

3. The measuring device (6) according to claim 2, wherein
- the coupling device (7) includes a spring means (7), and
- the contact means (15, 16) can be held in the open position by the spring means (7).

4. The measuring device (6) according to claim 2 or 3, wherein
- the coupling device (7) is arranged in the handpiece so as to be axially movable along a longitudinal axis of the measuring device (6), and
- when the contact means is moved to the closed position, the coupling device (7), the transmitting device (8) and/or the receiving device (8) can be inserted into the handpiece.

5. The measuring device (6) according to any of claims 2 to 4, wherein
- the coupling device (7) includes a cap having an elastic material,
- the transmitting device (8) and/or the receiving device (8) are component parts of the cap and are arranged inside the cap immediately adjacent to an end face of the cap, and
- the contact means (15, 16) is coupled to the cap.

6. The measuring device (6) according to any of claims 2 to 5, wherein
- the transmitting device (8), the receiving device (8) and/or the contact means (15, 16) are integrated and/or vulcanized with the cap to form a component which is axially movable within the measuring device along a longitudinal axis of the measuring device (6).

7. The measuring device (6) according to any of the preceding claims, comprising
- an ultrasonic transducer (8) integrating the transmitting device (8) and the receiving device (8).

8. The measuring device (6) according to any of the preceding claims, wherein
- the output device (10) includes an optical signaling device (10, 10a, 10b, 10c), the optical signaling device (10, 10a, 10b, 10c) being switchable as a function of the measurement result.

9. The measuring device (6) according to any of the preceding claims, wherein
- the measuring device (6) includes an acoustic signaling device for outputting an acoustic signal upon termination of the determination of the measurement result.

10. A method of determining a filling level of a liquid (3) in a container (1) with the aid of a measuring device (6) according to any of the preceding claims in a measuring process, comprising:
- pressing the coupling device (7) against a lateral wall (5) of the container (1) at a height level;
- generating the ultrasonic signal by the transmitting device (8) and introducing the ultrasonic signal into the wall by the coupling device (7);
- routing the echo out from the wall by the coupling device (7) and detecting the echo by the receiving device (8);
- determining the measurement result by the evaluating device (9) on the basis of a classification of the echo, the measurement result indicating whether or not a liquid (3) is present in an area of an interior of the container (1) immediately adjacent behind a surface of the wall (5) to which the coupling device (7) is coupled;
- outputting the measurement result by the output device (10); and
- illuminating an area located around the coupling device (7) at the request of an operator via the switchable luminous device in the area of the coupling device.

11. The method according to claim 10, comprising
- triggering the measuring process by pressing the coupling device (7) against the wall (5).

## Revendications

1. Appareil de mesure (6) pour la détermination du niveau sur un récipient depuis l'extérieur, comprenant :
- un dispositif d'émission (8) pour l'émission d'un signal ultrasonore ;
- un dispositif de réception (8) pour la réception d'un écho du signal ultrasonore ;
- un dispositif de couplage (7) pour le guidage du signal ultrasonore hors du dispositif d'émission (8) et l'introduction de l'écho du signal ultrasonore vers le dispositif de réception ;
- un dispositif d'évaluation (9) pour la détermination d'un résultat de mesure sur la base d'une classification de l'écho du signal ultrasonore reçu par le dispositif de réception (8), le résultat de mesure indiquant si un liquide se trouve ou non dans une zone d'un intérieur du récipient immédiatement adjacente derrière une face de la paroi du récipient à laquelle le dispositif de couplage (7) est couplé ; et
- un dispositif de sortie (10) pour la sortie du résultat de mesure ;
- le dispositif d'émission (8), le dispositif de réception (8), le dispositif de couplage (7), le dispositif d'évaluation (9) et le dispositif de sortie (10) étant agencés dans ou sur une pièce à main mobile,
- un dispositif d'illumination commutable étant agencé dans la zone du dispositif de couplage (7), et
- un dispositif de butée (19) en un matériau sensiblement rigide et transparent qui est sensiblement apte à être illuminé par transparence par le dispositif d'illumination étant agencé sur au moins deux côtés opposés du dispositif de couplage (7), et
- un angle d'inclinaison du dispositif de couplage (7) lors du couplage du dispositif de couplage (7) sur une paroi (5) du récipient étant apte à être limité par le dispositif de butée (19).

2. Appareil de mesure (6) selon la revendication 1, dans lequel
- le dispositif de couplage (7) présente un moyen de contact (15, 16),
- le moyen de contact (15, 16) est apte à être déplacé entre une position ouverte dans laquelle un commutateur se trouve dans sa position ouverte, et une position fermée dans laquelle le commutateur se trouve dans sa position fermée, et
- le dispositif d'émission (8) est aménagé de manière à émettre le signal ultrasonore, le dispositif de réception (8) est aménagé de manière à recevoir l'écho du signal ultrasonore, et/ou l'unité d'évaluation est aménagée de manière à déterminer le résultat de mesure lorsque la position fermée est atteinte.

3. Appareil de mesure (6) selon la revendication 2, dans lequel
- le dispositif de couplage (7) présente un moyen à ressort (7), et
- le moyen de contact (15, 16) est apte à être retenu dans la position ouverte par le moyen à ressort (7).

4. Appareil de mesure (6) selon la revendication 2 ou 3, dans lequel
- le dispositif de couplage (7) est agencé axialement déplaçable le long d'un axe longitudinal de l'appareil de mesure (6) dans la pièce à main ; et
- le dispositif de couplage (7), le dispositif d'émission (8) et/ou le dispositif de réception (8) sont aptes à être poussés dans la pièce à main lors du déplacement du moyen de contact dans la position fermée.

5. Appareil de mesure (6) selon l'une des revendications 2 à 4, dans lequel
- le dispositif de couplage (7) présente un capuchon présentant un matériau élastique,
- le dispositif d'émission (8) et/ou le dispositif de réception (8) sont des composants du capuchon et sont agencés à l'intérieur du capuchon immédiatement adjacents à une face frontale du capuchon, et
- le moyen de contact (15, 16) est couplé au capuchon.

6. Appareil de mesure (6) selon l'une des revendications 2 à 5, dans lequel
- le dispositif d'émission (8), le dispositif de réception (8) et/ou le moyen de contact (15, 16) sont intégrés et/ou vulcanisés avec le capuchon de manière à former un composant axialement mobile dans l'appareil de mesure le long d'un axe longitudinal de l'appareil de mesure (6).

7. Appareil de mesure (6) selon l'une des revendications précédentes, comprenant
- un transducteur ultrasonique (8) intégrant le dispositif d'émission (8) et le dispositif de réception (8).

8. Appareil de mesure (6) selon l'une des revendications précédentes, dans lequel
- le dispositif de sortie (10) présente un dispositif de signalisation optique (10, 10a, 10b, 10c), le dispositif de signalisation optique (10, 10a, 10b, 10c) étant commutable en fonction du résultat de mesure.

9. Appareil de mesure (6) selon l'une des revendications précédentes, dans lequel
- l'appareil de mesure (6) présente un dispositif de signalisation acoustique pour la sortie d'un signal acoustique à la fin de la détermination du résultat de mesure.

10. Procédé de détermination d'un niveau d'un liquide (3) dans un récipient (1) au moyen d'un appareil de mesure (6) selon l'une des revendications précédentes dans une procédure de mesure, comprenant :
- l'appui du dispositif de couplage (7) contre une paroi latérale (5) du récipient (1) à un niveau de hauteur ;
- la génération du signal ultrasonore au moyen du dispositif d'émission (8) et l'introduction du signal ultrasonore dans la paroi par le dispositif de couplage (7) ;
- le guidage de l'écho hors de la paroi par le dispositif de couplage (7) et la détection de l'écho par le dispositif de réception (8) ;
- la détermination du résultat de mesure par le dispositif d'évaluation (9) sur la base d'une classification de l'écho, le résultat de mesure indiquant si un liquide (3) se trouve ou non dans une zone d'un intérieur du récipient (1) immédiatement adjacente derrière une face de la paroi (5) à laquelle le dispositif de couplage (7) est couplé ;
- la sortie du résultat de mesure par le dispositif de sortie (10) ; et
- l'illumination d'une zone se trouvant autour du dispositif de couplage (7) sur demande par un utilisateur au moyen du dispositif d'illumination commutable dans la zone du dispositif de couplage.

11. Procédé selon la revendication 10, comprenant
- le déclenchement de la procédure de mesure par l'appui du dispositif de couplage (7) contre la paroi (5).
